# EUROPEAN PATENT APPLICATION

(11) **EP 3 651 027 A1**
(43) Date of publication of application: **13.05.2020**
(21) Application number: 19199060.5
(22) Date of filing: 05.07.2006
(51) Int. Cl.: G06F 15/00, G06F 9/52, G06F 11/16, G09C 1/00

(54) **SYNCHRONIZED HIGH-ASSURANCE CIRCUITS**

(30) Priority: 05.07.2005 US 69707105 P; 05.07.2005 US 69707205 P; 03.07.2006 US 42850806; 03.07.2006 US 42851606
(62) Divisional of application: 06786509.7
(71) Applicant: ViaSat Inc., Carlsbad CA 92009 (US)
(72) Inventor: BOURDON, Albert J., Carlsbad, CA 92009 (US); CHRISTENSEN, Gary G., Carlsbad, CA 92009 (US); GODFREY, Michael G., Carlsbad, CA 92009 (US); O'KEEFFE, Sean K., Carlsbad, CA 92009 (US); OWENS, John R., Carlsbad, CA 92009 (US)
(74) Representative: Smith, Jeremy Robert

(57) **Abstract**

A high-assurance system for processing information is disclosed. The high-assurance system comprising first and second processors, a task matching circuit, and first and second outputs. The task matching circuit configured to determine a software routine is ready for execution on the first processor, and delay the first processor until the second processor is ready to execute the software routine. The first output of the first processor configured to produce a first result with the software routine. The second output of the second processor configured to produce a second result with the software routine, where the first result is identical to the second result.

## Description

This application claims the benefit of US Patent Application No. 11/428,508 filed on July 3, 2006, and US Patent Application No. 11/428,516 filed on July 3, 2006; which are non-provisionals of both US Provisional Application No. 60/697,071 filed on July 5, 2005, and US Provisional Application No. 60/697,072 filed on July 5, 2005; which are all assigned to the assigner hereof and hereby expressly incorporated by reference in their entirety for all purposes.

### BACKGROUND

This disclosure relates in general to high-assurance processing and, but not by way of limitation, to redundant circuits used in cryptographic processing.

Some cryptosystems today use microprocessors. Often redundancy is used to assure proper operation of the cryptosystem. Microprocessors may be implemented redundantly. To assure they operate in synchronization, the microprocessors may be run in lock-step fashion such that they perform their execution in unison. Should one processor vary its operation from the other, a comparison function would find the problem.

Under many circumstances, the same processors working in unison will eventually drift apart. Power conservation circuits can throttle-back sub-circuits to save power and/or prevent overheating. Interrupts can often be asynchronous received. Out-of-order execution can also cause unpredictability in the processing flow of microprocessors. These and other factors make some microprocessor designs unsuitable for lock-step operation.

Lock-step designs require circuits that match very closely to prevent one from getting out of synchronization with another. Synchronizers are used to align events that occur at different times. Where circuits cannot be matched or are changed during repair, the lock-step design may no longer operate in synchronization.

For lock-step operation, the software on all mirrored microprocessors must execute together, which requires the same software execution on the microprocessors. Some software tasks are appropriate for lock-step operation, while others do not require that level of harmonization. Redundant execution of all software wastes resources on routines that have no need for harmonization.

### SUMMARY

In one embodiment, the present disclosure provides a high-assurance system for processing information. The high-assurance system comprising first and second processors, a task matching circuit, and first and second outputs. The task matching circuit configured to determine a software routine is ready for execution on the first processor, and delay the first processor until the second processor is ready to execute the software routine. The first output of the first processor configured to produce a first result with the software routine. The second output of the second processor configured to produce a second result with the software routine, where the first result is identical to the second result.

In one embodiment, the present disclosure provides a task matching circuit for synchronizing software on a plurality of processors is disclosed. The task matching circuit includes first and second inputs, an analysis sub-circuit, and an output. The first input is from a first processor configured to receive a first software routine identifier. The second input is from a second processor configured to receive a second software routine identifier. The analysis sub-circuit determines if the first software routine identifier corresponds with the second software routine identifier. The output is coupled to at least one of the first or second processors and indicates when the first and second software routine identifiers do not correspond. One of the first and second processors is delayed until the first and second software routine identifiers correspond.

Further areas of applicability of the present disclosure will become apparent from the detailed description provided hereinafter. It should be understood that the detailed description and specific examples, while indicating various embodiments, are intended for purposes of illustration only and are not intended to necessarily limit the scope of the disclosure.

### BRIEF DESCRIPTION OF THE DRAWINGS

The present disclosure is described in conjunction with the appended figures:
FIGs. 1A and 1B depict block diagrams of embodiments of a redundant processing system;
FIGs. 2A, 2B and 2C depict block diagrams of embodiments of a task management circuit interacting with two processors;
FIG. 3 illustrates a flowchart of an embodiment of a process for aligning processing of some tasks on two circuits; and
FIGs. 4A and 4B illustrate flowcharts of embodiments of a process for managing task alignment for two circuits.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides preferred exemplary embodiment(s) only, and is not intended to limit the scope, applicability or configuration of the disclosure. Rather, the ensuing description of the preferred exemplary embodiment(s) will provide those skilled in the art with an enabling description for implementing a preferred exemplary embodiment. It being understood that various changes may be made in the function and arrangement of elements without departing from the spirit and scope as set forth in the appended claims.

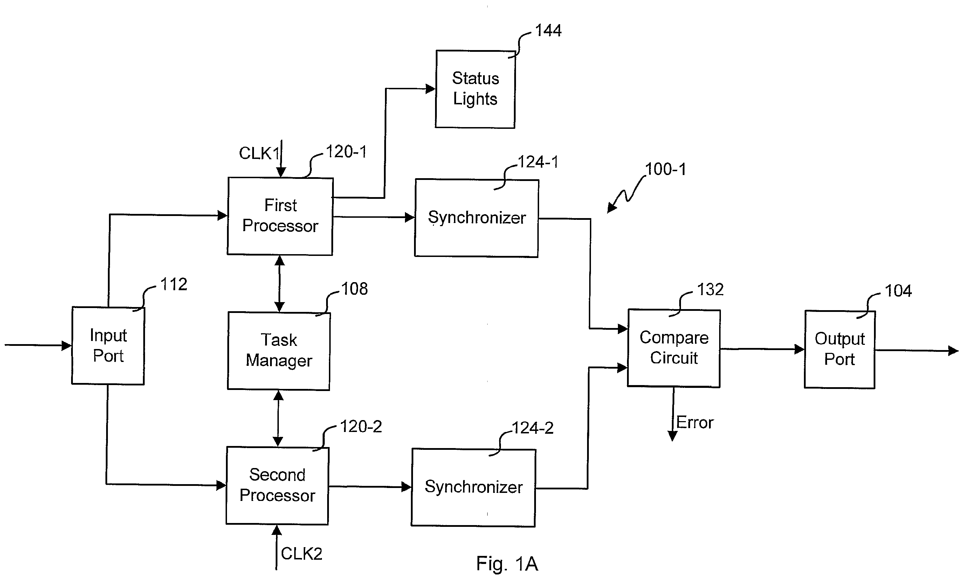

Referring first to **FIG. 1A****,** a block diagram of an embodiment of a redundant processing system 100-1 is shown. This embodiment uses two processors 120 that synchronize on occasion for high-assurance tasks, but may be out of synchronization at other times when other tasks are being performed. The block diagram is simplified in that only a few blocks are shown that demonstrate high-assurance tasks and a low-assurance task. A task is any discrete function, routine, snippet, applet, program, or process that can be implemented in software and/or hardware. In this example, servicing the input and output ports is high-assurance, but operating status lights is low-assurance. When performing high-assurance tasks, redundant processing is performed where the results are compared to assure a match. Even though this embodiment only shows two redundant sub-circuits, other embodiments could have any number of redundant sub-circuits, e.g., four, six, eight, etc.

High-assurance tasks include servicing an input and output ports 112, 104. The input port 112 receives information that is redundantly sent to a first processor 120-1 and a second processor 120-2 for processing. The processing could include formatting, validity checks, cryptographic processing, etc. The processors 120 could be of the same or a similar configuration. In this embodiment, the clocks for the processors 120 are not synchronized and could run at different speeds. For example, the first processor 120 could run faster or more efficiently to allow for extra low-assurance tasks to be serviced such as servicing the status lights 144. When running the same high-assurance tasks, the processors 120 could disable further interrupts to avoid one or both processors 120 from wandering away from the current task and risking a loss of synchronization.

A task manager 108 is used in this embodiment to allow coordinating pursuit of high-assurance tasks by ensuring that each processor performs the shared high-assurance tasks in the same order. These processors may have other tasks interspersed between the shared tasks. One of the processors 120 initiates a high-assurance task and notifies the task manager 108 who makes sure the other processor 120 is ready to initiate the same high-assurance task. When both processors 120 are ready, the task manager 108 notifies both to begin execution.

An example can illustrate the task synchronization process. A message is received on the input port and both processors 120 are interrupted to gather and process the message. The first processor 120-1 to execute its interrupt service routine (ISR) would get to the point of notifying the task manager 108. Presumably, the other processor 120-2 is getting to a similar point in its respective ISR. The task manager 108 would hold the first processor 120-1 to wait for the second processor 120-2. The second processor 120-2 could be prompted by the task manager 108 to cycle through all potential tasks until the one indicated by the first processor 120-1 matches. The task manager 108 would coordinate both processors 120 in beginning to execute the same task. Although this embodiment does not require lock-step processing of high-assurance tasks, other embodiments could use lock-step processing when executing high-assurance tasks.

Although the task manager should assure that both processors 120 work the same task in the same order, the results can be out of time synchronization. Synchronizers 124 in this embodiment can realign the output from each processor and/or reduce the risk of metastability when going from one clock domain to another. In one embodiment, the synchronizer 124 for each processor 120 produces results in synchronization by buffering results from the processor and aligning those results or forgiving any misalignment. In one embodiment, the task manager 108 could allow the processors 120 coordinate writing out information such that alignment issues are reduced. This embodiment of the synchronizer would still reduce the risk of metastability when crossing clock domains.

The compare circuit 132 checks that the results produced after synchronization match before sending a result to the output port 104. Where there is no match an error is produced and the result is not sent to the output port 104. Some embodiments of the compare circuit 132 may allow the results from each synchronizer 124 to be one or more clock cycles out of sync when performing the comparison without producing an error.

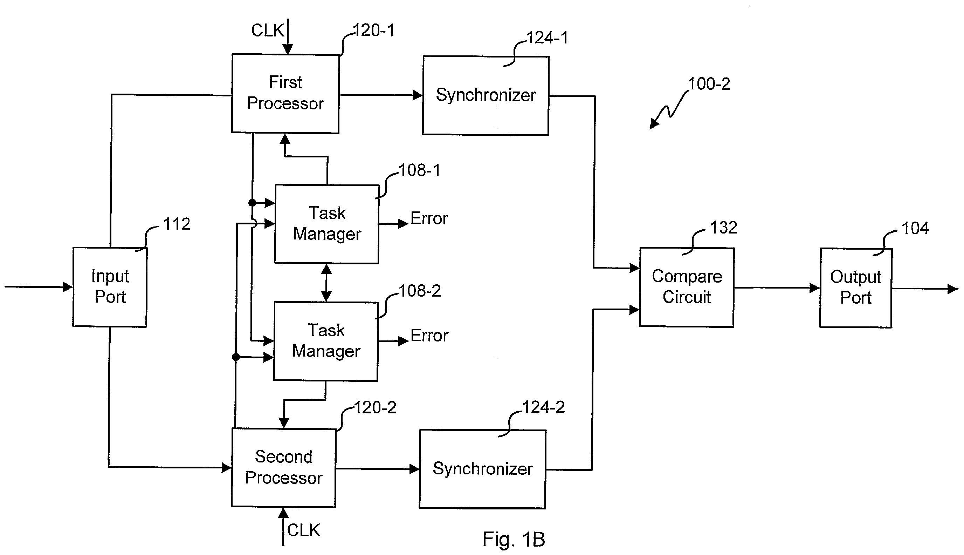

With reference to **FIG. 1B****,** a block diagram of another embodiment of a redundant processing system is shown. This embodiment has two task managers 108 that are used to achieve redundancy in the task management function. Each processor 120 responds to its respective task manager 108-1, 108-2, who then coordinate aligning the task execution. In this embodiment, the two processors 120 could be different designs or clocked at different frequencies such that lock-step synchronization is not realized. The task managers 108 keep the processors 120 task aligned for some high-assurance tasks despite any differences in the processors 120. Should the task managers 108 disagree at some point, an error would be produced. Comparison circuits could, for example, be used to check the output of the task managers 108. The synchronized task output comparator 132 acts as in FIG 1A.

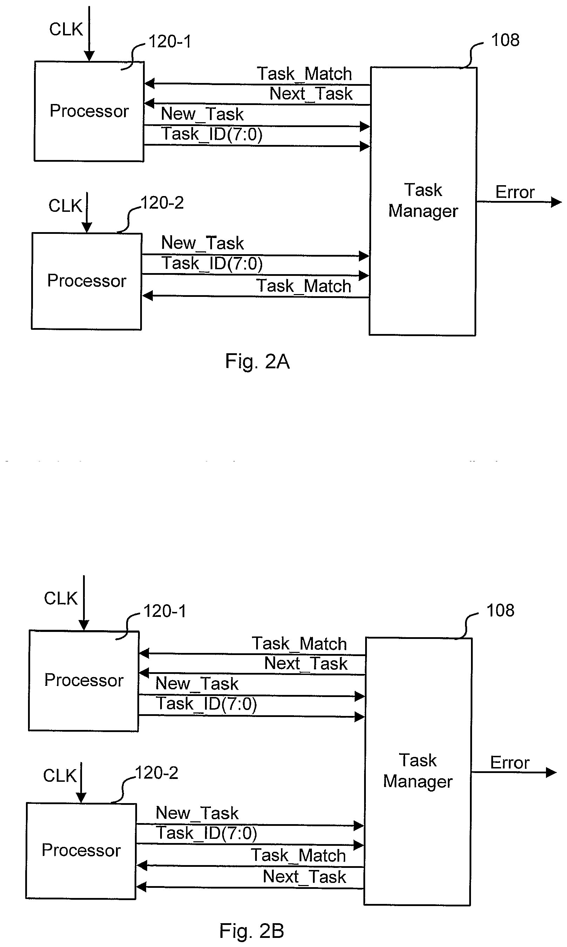

Referring next to **FIG. 2A****,** a block diagram of an embodiment of a task management circuit 108 interacting with two processors 120 is shown. Only a single task manager 108 is used in this embodiment, but other embodiments could use redundant task managers. In this embodiment, the second processor 120-2 initiates task synchronizations as a master of the process and the first processor 120-1 acts as a slave.

For a high-assurance task, the second processor 120-2 activates the *New_Task* signal. The task manager 108 reads the *Task_ID* value from the second processor 120-2. Activation of the *New_Task* signal and writing the *Task_ID* is coded into the task routine run on the second processor 120-2. This embodiment uses an eight bit value to indicate the task identifier, but other embodiments could use a 16-bit, 32-bit value or any other sized value. The *Task_ID* is unique to a particular high-assurance task run on both processors 120.

With the *Task_ID,* the task manager 108 activates the *Next_Task* signal to ask the first processor 120-1 to indicate the next task queued for execution. The first processor activates its *New_Task* signal to indicate validity of a *Task_ID.* Where there is no match of both *Task_IDs,* the task manager 108 asks the first processor to move to the next task by activation of the *Next_Task* signal. Should the two *Task_IDs* match or correspond, however, the *Task_Match* signals are activated. This would signal to both processors 120 to begin to execute the same task indicated by the *Task_IDs.* If no task match is produced within a predetermined time or number of trials, the processor would discard that task from its queue and continue in one embodiment.

With reference to **FIG. 2B****,** a block diagram of another embodiment of a task management circuit 108 interacting with two processors 120 is shown. In this embodiment, either processor can initiate a task synchronization. The first to initiate would act as the master of the process and the other processor would act as the slave. The task manager 108 would work with the master processor 120 until matching tasks are found and executed before allowing another initiation of the task matching process. Alternative embodiments could redundantly implement the task manager 108 and still allow dynamically assigning the master of the process. Disagreement between redundant task managers 108 would be recognized as an error.

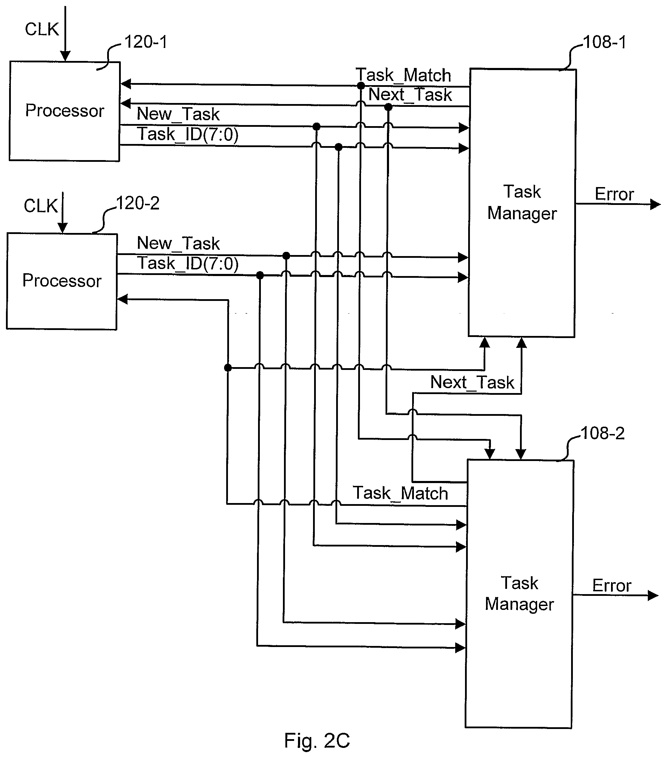

With reference to **FIG. 2C****,** a block diagram of an embodiment of redundant task management circuits 108 interacting with two processors 120 is shown. This embodiment utilizes redundancy in the task management circuits 108 to provide high-assurance. Both task management circuits 108 compare tasks and report task incrementing and matching tasks to each other. Where the two task managers 108 are not in agreement, an error is generated. In the depicted embodiment, second processor 120-2 acts as a master and the first processor acts as a slave in the process of synchronizing execution of a high-assurance task. The first processor is directly manipulated by the first task manager 108-1, and the second processor is directly manipulated the second task manager 108-2.

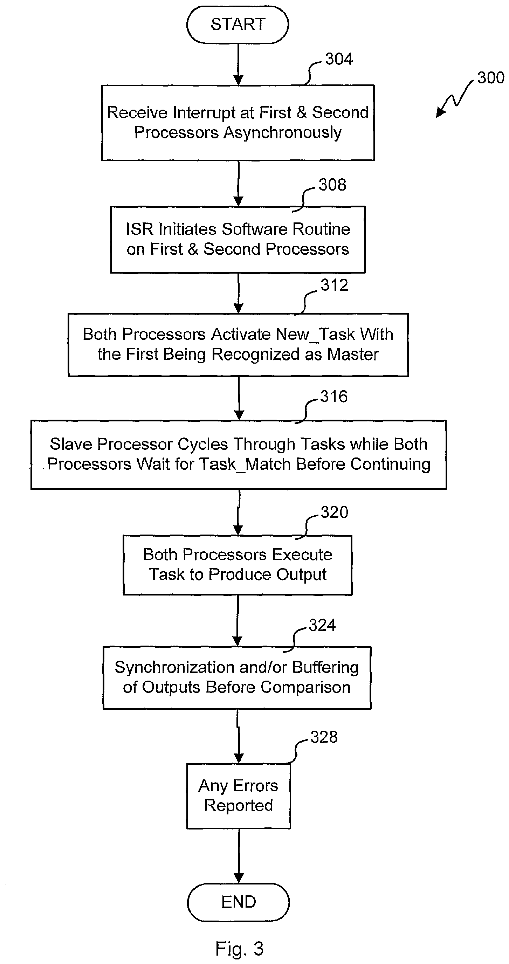

Referring next to **FIG. 3****,** a flowchart of an embodiment of a process for aligning processing of some tasks on two circuits is shown. The depicted portion of the process begins in block 304 where the first and second processors 120 receive an interrupt to perform some sort of high-assurance task. Alternatively, the processors 120 could poll a register to determine when a high-assurance task should be initiated. An ISR indicated by the interrupts is started on both processors 120. The two processors 120 may start processing the interrupts at different times in block 308. Further, processing could be rearranged or interrupted such that both processors 120 are not performing the same actions at the same time.

In this embodiment, both processors could potentially be the master initiating the task matching process, but only one is allowed to master the process. Where both activate their respective *New_Task* lines simultaneously, the task manager 108 could arbitrarily, randomly or repeatedly pick one of the two to be the master. In block 312, one or both processors 120 activate the *New_Task* line and one is recognized as master. In block 316, the slave processor 120 is tested to determine if the *Task_ID* matches with the master processor 120. Where there is no match, the slave processor cycles through tasks as *Next_Task* is activated successively. At some point in block 316, *Task_Match* goes active to indicate that both processors 120 have the same *Task_ID* at the top of their execution queue.

With matching *Task_IDs, Task_Match* signals to both processors that they should start execution of the high-assurance task in block 320 and produce an output of some sort. The operation of the processors 120 may or may not be in lock-step during execution of the high-assurance task. Some, all or low-priority interrupts may be disabled during execution of the high-assurance task to control the interrupts tolerated. Synchronization and/or buffering may or may not be done on the output before comparing the outputs from both processors 120. Any errors are handled and reported in block 328.

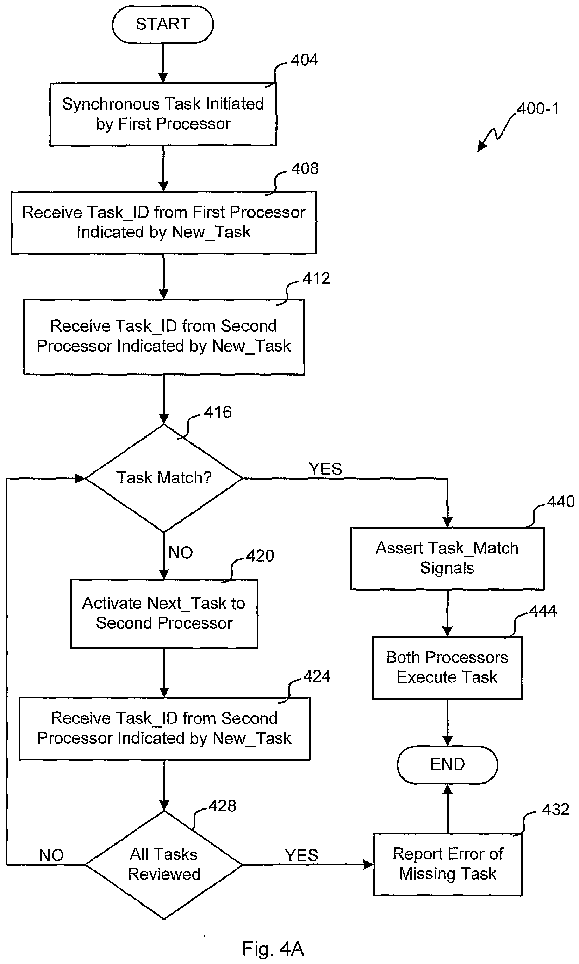

With reference to **FIGs. 4A****,** a flowchart of an embodiment of a process 400-1 for managing task alignment for two circuits is shown. The circuits may be state machine driven or processor driven, but in this embodiment both circuits use processors. The depicted portion of the process begins in step 404 where a synchronous or high-assurance task is initiated by a first processor 120. The task manager 108 is told by the first processor's activation of the *New_Task* line to observe the *Task_ID* value in block 408. The identification of the task from the second processor is received in block 412. In one embodiment, the *New_Task* line serves to latch the *Task_ID* into a register of the task manager 108. If operating correctly, both processors have the task ready to execute, but on the second processor, the task may not be at the top of the queue.

A test in block 416 determines if the *Task_IDs* for both processors match. In some embodiments this could be an exact match or just that they correspond. For example, one embodiment may use hexadecimal number for one processor's *Task_ID* and ASCII for the other processor's *Task_ID.* The task manager 108 would know how to correspond or translate one to the other. Where the *Task_IDs* correspond, the *Task_Match* signal is asserted by the task manager 108 and fed to both processors in block 440. Both processors 120 execute the task in block 444 to produce some output or result. The processors 120 may or may not act in lock-step.

Should the tasks not match in block 416, one of the processors rotates through its tasks until they do correspond. In block 420, the *Next_Task* signal is activated by the task manager 108. This signal tells the second processor to present the *Task_ID* for another task. The second processor may randomly, sequentially or use some other scheme to present the next task for a possible match. This embodiment presents tasks thought to be high-assurance first before presenting low-assurance tasks for a possible match. The next *Task_ID* for the second processor 120 is received by the task manager 108 in block 424.

In block 428, a determination is made to see if all tasks have been presented. This could be done by waiting for the same task to be presented again, by a signal from the processor, or a time delay that would permit review of all tasks. Where all have been reviewed and a match wasn't found, processing goes from block 428 to block 432 where an error is reported. If all the tasks have not been reviewed in block 428, processing loops back to block 416 to determine if there is a match before further processing as described above.

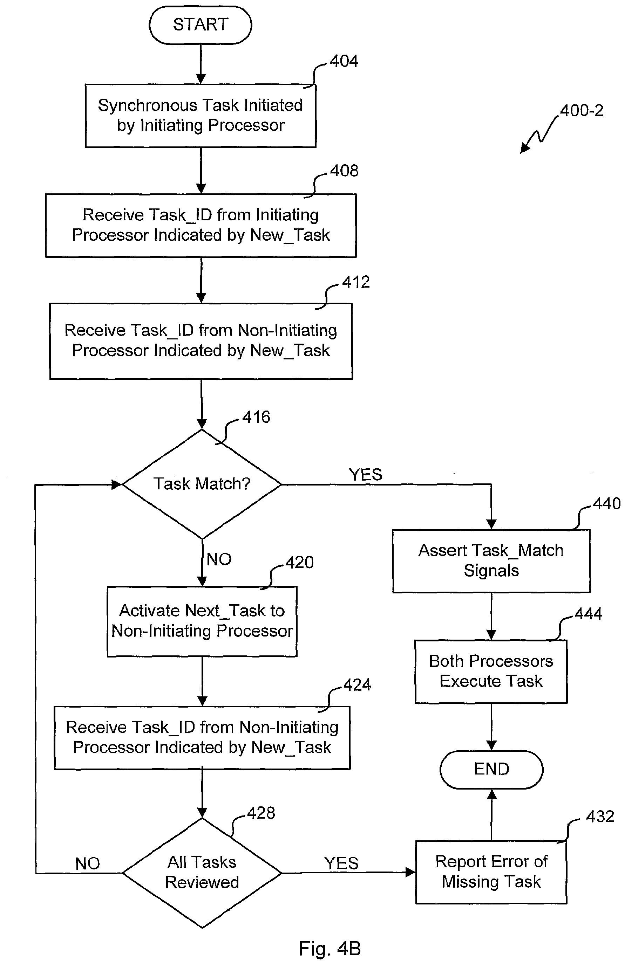

With reference to **FIGs. 4B****,** a flowchart of another embodiment of a process 400-2 for managing task alignment for two circuits is shown. In this embodiment, both processors 120 can initiate a task check. The initiating processor masters the process and the non-initiating processor is a slave in the process. The first processor to identify the high-assurance task and activate the *New_Task* becomes the initiating processor. The initiating processor could be chosen in other ways in other embodiments.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels, and/or various other mediums capable of storing, containing or carrying instruction(s) and/or data.

Furthermore, embodiments may be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks may be stored in a machine readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof.

For a software implementation, the techniques, processes and functions described herein may be implemented with modules (e.g., procedures, functions, and so on) that perform the functions described herein. The software codes may be stored in memory units and executed by processors. The memory unit may be implemented within the processor or external to the processor, in which case the memory unit can be communicatively coupled to the processor using various known techniques.

While the principles of the disclosure have been described above in connection with specific apparatuses and methods, it is to be clearly understood that this description is made only by way of example and not as limitation on the scope of the disclosure.

The disclosure comprises the following items:
1. A high-assurance system for processing information, the high-assurance system comprising:
   a first processor;
   a second processor;
   a task matching circuit configured to:
      determine a software routine is ready for execution on the first processor, and
      delay the first processor until the second processor is ready to execute the software routine;
   a first output of the first processor configured to produce a first result with the software routine; and
   a second output of the second processor configured to produce a second result with the software routine, wherein the first result is identical to the second result.
2. The high-assurance system for processing information as recited in item 1, wherein the first microprocessor is different from the second microprocessor.
3. The high-assurance system for processing information as recited in item 1, wherein:
   the first processor operates off a first clock signal at a first frequency;
   the second processor operates off a second clock signal at a second frequency; and
   the first frequency is different from the second frequency.
4. The high-assurance system for processing information as recited in item 1, wherein the software routine includes a plurality of program instructions.
5. The high-assurance system for processing information as recited in item 1, wherein the first result is produced at a different time than the second result.
6. The high-assurance system for processing information as recited in item 1, further comprising a synchronizing circuit configured to align the first and second result in time.
7. The high-assurance system for processing information as recited in item 1, further comprising a comparison circuit configured to compare the first result to the second result.
8. A processing method for high-assurance applications executed on redundant processors, the processing method comprising:
   providing a first processing circuit;
   providing a second processing circuit, wherein the first processing circuit is capable of executing software out of synchronization with the second processing circuit during normal operation;
   detecting a task check is initiated;
   determining a software routine that correlates to the task check;
   confirming that both the first processing circuit and the second processing circuit are performing the software routine, at least in part, simultaneously in time;
   delaying execution of the software routine by the first processing circuit until the second processing circuit is ready to execute the software routine;
   producing a first result from the first processor with the software routine; and
   producing a second result from the second processor with the software routine, wherein the first and second results are identical.
9. The processing method for high-assurance applications executed on redundant processors as recited in item 8, further comprising a step of checking that the first result matches the second result.
10. The processing method for high-assurance applications executed on redundant processors as recited in item 8, further comprising a step of buffering at least one of the first and second results until they are available for readout in a time-synchronous manner.
11. The processing method for high-assurance applications executed on redundant processors as recited in item 8, further comprising a step of comparing the first and second results in a bitwise fashion.
12. The processing method for high-assurance applications executed on redundant processors as recited in item 8, further comprising a step of producing an error when the first and second results are different.
13. The processing method for high-assurance applications executed on redundant processors as recited in item 8, wherein the task check is only received for a subset of the software routines.
14. The processing method for high-assurance applications executed on redundant processors as recited in item 8, wherein the software routine includes a plurality of program instructions.
15. The processing method for high-assurance applications executed on redundant processors as recited in item 8, further comprising a step of synchronizing in time the first and second results.
16. The processing method for high-assurance applications executed on redundant processors as recited in item 8, wherein execution of the software routine by the first processor is asynchronous with execution of the software routine by the second processor on an instruction-to-instruction basis.
17. The processing method for high-assurance applications executed on redundant processors as recited in item 8, wherein producing steps produce the first result and second results a plurality of clock cycles apart in time.
18. A data signal embodied in a carrier wave having machine-executable instructions for performing the machine-implementable method for high-assurance applications executed on redundant processors of item 8.
19. A high-assurance system for processing information, the high-assurance system comprising:
   a first circuit;
   a second circuit;
   a task matching circuit configured to:
      determine a function is ready to be performed on the first circuit,
      delay the first circuit until the second circuit is ready to execute a corresponding function;
   a first output of the first circuit configured to produce a first result with the function;
   a second output of the second circuit configured to produce a second result with the function, wherein the first result is determinable from the second result; and
   analyzing the first and second results to determine if they correspond.
20. The high-assurance system for processing information as recited in item 19, wherein the first circuit includes a processor and the second circuit does not include a processor.
21. The high-assurance system for processing information as recited in item 19, wherein the first and second results are identical.
22. The high-assurance system for processing information as recited in item 19, wherein:
   the first circuit operates off a first clock signal at a first frequency;
   the second circuit operates off a second clock signal at a second frequency; and
   the first frequency is different from the second frequency.
23. The high-assurance system for processing information as recited in item 19, wherein the function comprises a plurality of program instructions.
24. The high-assurance system for processing information as recited in item 19, wherein the first result is produced at a different time than the second result.
25. The high-assurance system for processing information as recited in item 19, further comprising a synchronizing circuit configured to align the first and second result in time.
26. A task matching circuit for synchronizing software on a plurality of processors, the task matching circuit comprising:
   a first input from a first processor configured to receive a first software routine identifier;
   a second input from a second processor configured to receive a second software routine identifier;
   an analysis sub-circuit to determine if the first software routine identifier corresponds with the second software routine identifier; and
   an output coupled to at least one of the first or second processors, wherein:
   the output is indicates when the first and second software routine identifiers do not correspond, and
   one of the first and second processors is delayed until the first and second software routine identifiers correspond.
27. The task matching circuit for synchronizing software on the plurality of processors as recited in item 26, wherein the first processor performs more software routines than the second processor during normal operation.
28. The task matching circuit for synchronizing software on the plurality of processors as recited in item 26, wherein the first processor initiates a task check process to synchronize the first and second processors.
29. The task matching circuit for synchronizing software on the plurality of processors as recited in item 26, wherein the first and second software routine identifiers correspond when the second software routine produces a result that the first software routine also produces.
30. The task matching circuit for synchronizing software on the plurality of processors as recited in item 26, wherein the first software routing identifier corresponds with a software routine comprising a plurality of instructions.
31. The task matching circuit for synchronizing software on the plurality of processors as recited in item 26, wherein a software routine, corresponding to the first software routine identifiers, comprises a plurality of software instructions.
32. The task matching circuit for synchronizing software on the plurality of processors as recited in item 26, wherein the first and second processors do not execute a software routine corresponding the first and second software routine identifiers until the output indicates that the first and second software routine identifiers correspond.
33. The task matching circuit for synchronizing software on the plurality of processors as recited in item 26, wherein the first processor operates off a first clock signal different from a second clock signal of the second processor.
34. A method for synchronizing tasks on redundant processors, the method comprising steps of:
   receiving a first software routine identifier from a first processor;
   determining if a second processor is ready to perform a second software routine corresponding to the first software routine identifier;
   waiting for the second processor to become ready to perform the second software routine corresponding to the software routine identifier; and
   indicating to the first processor that the second processor has become ready to perform the software routine corresponding to the software routine identifier.
35. The method for synchronizing tasks on redundant processors as recited in item 34, wherein the first processor cannot communicate directly with the second processor.
36. The method for synchronizing tasks on redundant processors as recited in item 34, further comprising a step of categorizing a plurality of software routine identifiers into those that are performed on both the first and second processors and those that are not, wherein:
   the first software routine identifier is part of the plurality of software routine identifiers, and
   the first software routine identifier is categorized in the categorizing step as one that is performed on both the first and second processors.
37. The method for synchronizing tasks on redundant processors as recited in item 34, further comprising a step of creating the first software routine identifier from contents of the software routine.
38. The method for synchronizing tasks on redundant processors as recited in item 34, wherein the software routine comprises a plurality of software instructions.
39. The method for synchronizing tasks on redundant processors as recited in item 34, wherein the first processor is a different design from the second processor.
40. The method for synchronizing tasks on redundant processors as recited in item 34, further comprising a step of causing the first processor and the second processor to execute the software routine, at least partially, simultaneous in time.
41. A data signal embodied in a carrier wave having machine-executable instructions for performing the synchronizing tasks on redundant processors of item 34.
42. A high-assurance circuit for coordinating performance on a plurality of sub-circuits, the high-assurance circuit comprising:
   a first input from a first sub-circuit configured to receive a first operation identifier;
   a second input from a second sub-circuit configured to receive a second operation identifier;
   an analysis sub-circuit to determine if the first operation identifier corresponds with the second operation identifier; and
   an output coupled to at least one of the first or second sub-circuits, wherein:
   the output is indicates when the first and second operation identifiers do not correspond to functionally overlapping operations, and
   one of the first and second sub-circuits is delayed until the first and second operation identifiers correspond to functionally overlapping operations.
43. The high-assurance circuit for coordinating performance on the plurality of sub-circuits as recited in item 42, wherein the first sub-circuit performs more functions than the second sub-circuit during normal operation.
44. The high-assurance circuit for coordinating performance on the plurality of sub-circuits as recited in item 42, wherein the first sub-circuit is integral to a processor.
45. The high-assurance circuit for coordinating performance on the plurality of sub-circuits as recited in item 42, wherein the second sub-circuit comprises a processor.
46. The high-assurance circuit for coordinating performance on the plurality of sub-circuits as recited in item 42, wherein functionally overlapping operations produce at least one result in common when given a same set of givens corresponding to the at least one result.
47. The high-assurance circuit for coordinating performance on the plurality of sub-circuits as recited in item 42, wherein the first and second sub-circuits do not execute a software routine corresponding the first and second operation identifiers until the output indicates that the first and second operation identifiers correspond.
48. The high-assurance circuit for coordinating performance on the plurality of sub-circuits as recited in item 42, wherein the first sub-circuit operates off a first clock signal different from a second clock signal of the second sub-circuit.

## Claims

1. A task matching circuit for synchronizing software on a plurality of processors, the task matching circuit comprising:
a first input from a first processor configured to receive a first software routine identifier;
a second input from a second processor configured to receive a second software routine identifier;
an analysis sub-circuit configured to determine if the first software routine identifier corresponds with the second software routine identifier; and
an output coupled to at least one of the first or second processors, wherein:
the output is configured to indicate when the first and second software routine identifiers do not correspond; and
one of the first and second processors is delayed until the first and second software routine identifiers correspond.

2. The task matching circuit for synchronizing software on the plurality of processors as recited in claim 1, wherein the first processor is configured to perform more software routines than the second processor during normal operation.

3. The task matching circuit for synchronizing software on the plurality of processors as recited in any preceding claim, wherein the first processor is configured to initiate a task check process to synchronize the first and second processors.

4. The task matching circuit for synchronizing software on the plurality of processors as recited in any preceding claim, wherein the first and second software routine identifiers correspond when the second software routine produces a result that the first software routine also produces.

5. The task matching circuit for synchronizing software on the plurality of processors as recited in any preceding claim, wherein the first software routine identifier corresponds to a software routine comprising a plurality of instructions.

6. The task matching circuit for synchronizing software on the plurality of processors as recited in any preceding claim, wherein the first and second processors are configured not to execute a software routine corresponding to the first and second software routine identifiers until the output indicates that the first and second software routine identifiers correspond.

7. The task matching circuit for synchronizing software on the plurality of processors as recited in any preceding claim, wherein the first processor is configured to operate off a first clock signal different from a second clock signal of the second processor.

8. The task matching circuit for synchronizing software on the plurality of processors as recited in any preceding claim, wherein the second input is configured to receive a plurality of second software routine identifiers and/or wherein the analysis sub-circuit is configured to prompt the second processor to cycle through a plurality of potential tasks until the first software routine identifier matches the second software routine identifier.

9. The task matching circuit for synchronizing software on the plurality of processors as recited in any preceding claim, wherein the first software routine identifier comprises a first value and the second software routine identifier comprises a second value.

10. The task matching circuit for synchronizing software on the plurality of processors as recited in any preceding claim, wherein the first software routine identifier and the second software routine identifier are unique to a particular high-assurance task to be run on both the first processor and the second processor.

11. The task matching circuit for synchronizing software on the plurality of processors as recited in any preceding claim, wherein the first processor is configured such that it cannot communicate directly with the second processor and/or wherein the first processor is a different design to the second processor.

12. The task matching circuit for synchronizing software on the plurality of processors as recited in any preceding claim, wherein the first software routine identifier is created from contents of the software routine.

13. The task matching circuit for synchronizing software on the plurality of processors as recited in any preceding claim , wherein the first processor is configured to execute the first software routine and the second processor is configured to execute the second software routine, at least partially, simultaneously in time.

14. A high-assurance system for processing information, the high-assurance system comprising:
the task matching circuit of any preceding claim;
the first processor; and
the second processor,
wherein a first output of the first processor is configured to produce a first result with the software routine,
wherein a second output of the second processor configured to produce a second result with the software routine, wherein the first result is identical to the second result.

15. A method for synchronizing software on a plurality of processors, the method comprising:
receiving a first software routine identifier from a first processor;
receiving a second software routine identifier from a second processor;
determining if the first software routine identifier corresponds with the second software routine identifier;
indicating when the first and second software routine identifiers do not correspond; and
delaying one of the first and second processors until the first and second software routine identifiers correspond.
